(19) **Europäisches Patentamt**

**European Patent Office**

**Office européen des brevets**

(11) **EP 1 029 900 B1**

(12) **EUROPÄISCHE PATENTSCHRIFT**

(45) Veröffentlichungstag und Bekanntmachung des Hinweises auf die Patenterteilung:
**15.09.2004 Patentblatt 2004/38**

(51) Int Cl.$^7$: **C09C 1/00**, C09D 11/00

(21) Anmeldenummer: **00102094.0**

(22) Anmeldetag: **03.02.2000**

(54) **Farbstarke Interferenzpigmente**

Interference pigments with high tinting strength

Pigments d'interférence à haut pouvoir colorant

(84) Benannte Vertragsstaaten:
**DE ES FI FR GB IT**

(30) Priorität: **15.02.1999 DE 19915153**

(43) Veröffentlichungstag der Anmeldung:
**23.08.2000 Patentblatt 2000/34**

(73) Patentinhaber: **MERCK PATENT GmbH**
**64293 Darmstadt (DE)**

(72) Erfinder:
• **Schmidt, Christoph, Dr.**
**65830 Krefeld (DE)**
• **Bernhardt, Klaus**
**64823 Gross-Umstadt (DE)**
• **Heinz, Dieter**
**64646 Heppenheim (DE)**

(56) Entgegenhaltungen:
**EP-A- 0 307 747          EP-A- 0 681 009**

**Beschreibung**

Die vorliegende Erfindung betrifft farbstarke Interferenzpigmente auf der Basis von mehrfach beschichteten plättchenförmigen Substraten.

Glanz- oder Effektpigmente werden in vielen Bereichen der Technik eingesetzt, insbesondere im Bereich der Autolacke, der dekorativen Beschichtung, im Kunststoff, in Farben, Druckfarben sowie in kosmetischen Formulierungen.

Glanzpigmente, die einen winkelabhängigen Farbwechsel zwischen mehreren Interferenzfarben zeigen, sind aufgrund ihres Farbenspiels von besonderem Interesse für Autolacke sowie bei fälschungssicheren Wertschriften. Derartige Pigmente auf Basis von mehrfach beschichteten plättchenförmigen Substraten sind z.B. aus der U.S. 4,434,010, JP H7-759, U.S. 3,438,796, U.S. 5,135,812, DE 44 05 494, DE 44 37 753, DE 195 16 181 und DE 195 15 988 bekannt.

Glanzpigmente auf Basis transparenter plättchenförmiger Substrate, die keinen "harten" metallischen Glanz aufweisen, sind Gegenstand der WO 93/12182. Glimmerplättchen werden mit einer hochbrechenden Metalloxid-schicht, wie z.B. TiO$_2$ , und einer nicht selektiv absorbierenden Schicht belegt. Diese Pigmente zeigen in Abhängigkeit von der TiO$_2$-Schichtdicke in der Aufsicht eine bestimmte Interferenzfarbe, die mit schräger werdendem Blickwinkel zunehmend schwächer wird und schließlich nach grau bzw. schwarz abkippt. Die Interferenzfarbe ändert sich nicht, aber es ist eine Abnahme der Farbsättigung festzustellen.

In der JP 1992/93206 werden Glanzpigmente auf Basis von Glasplättchen bzw. Glimmerpartikeln beansprucht, die mit einer opaken Metallschicht und alternierenden SiO$_2$- und TiO$_2$-Schichten belegt sind.

Aus der EP 0 753 545 A2 sind goniochromatische Glanzpigmente auf Basis von mehrfach beschichteten, hochbrechenden, für sichtbares Licht zumindest teilweise durchlässigen, nichtmetallischen, plättchenförmigen Substraten bekannt, die mindestens ein Schichtpaket aus einer farblosen niedrigbrechenden und einer reflektierenden, selektiv oder nicht selektiv absorbierenden Beschichtung aufweisen. Bei dem in EP 0 753 545 A2 beschriebenen Herstellungsverfahren handelt es sich um eine Beschichtung des Pigmentsubstrates über CVD (Chemical Vapour Deposition) in einem Wirbelbettreaktor ("Fluidized Bed"-Verfahren). Dabei wird das Substrat, z.B. feinteiliger Glimmer, in einem Strom eines inerten Trägergases aufgewirbelt und in Bewegung gehalten. Die zur Bildung der Oxidschichten erforderlichen Reagentien werden über den Inertgasstrom bzw. weitere Inertgaseinlässe zugeführt. Aufgrund des hohen Dichteunterschiedes zwischen dem Glimmer/Pigment und dem Trägergas ist jedoch ein wesentliches Problem dieses Verfahrens eine gleichmäßige Verteilung der Feststoffteilchen und damit eine gleichmäßige Beschichtung. Nachteile dieser Erfindung sind demzufolge der technisch sehr aufwendige und kostenintensive Herstellungsprozeß sowie die oft schwere Reproduzierbarkeit der Pigmente in der gewünschten Produktqualität.

Goniochromatische Glanzpigmente mit einer siliziumhaltigen Beschichtung auf Basis von mehrfach beschichteten plättchenförmigen metallischen Substraten sind aus der EP 0 768 343 A2 bekannt.

Den aus dem Stand der Technik bekannten Mehrschichtpigmenten ist gemeinsam, daß sie eine zu geringe Farbstärke und ein vergleichsweises niedriges Deckvermögen besitzen. Weiterhin sind die Pigmente zum Teil sehr schwer herstellbar bzw. reproduzierbar.

Aufgabe der vorliegenden Erfindung ist es, deckende Gold- und Orangerote-Interferenzpigmente mit einer hohen Fabrstärke zur Verfügung zu stellen, die sich durch ihre vorteilhaften Anwendungseigenschaften auszeichnen und gleichzeitig auf einfache Art und Weise hergestellt werden können.

Überraschenderweise wurden nun Gold- und Orangerotpigmente auf Basis von mehrfach beschichteten plättchenförmigen Substraten gefunden, die eine bestimmte Anordnung optisch funktioneller Schichten enthalten, wodurch besondere optische Effekte erzielt werden.

Die erfindungsgemäßen farbstarken Interferenzpigmente zeichnen sich durch ihre außerordentlich hohe Buntheit C* ("Farbstärke"), ihr sehr hohes Deckvermögen und einen sehr starken Glanz mit Glitzereffekt aus. Im Gegensatz zu goldfarbenen Perlglanzpigmenten, wie sie beispielsweise aus der EP 0 211 351 B1 bekannt sind, zeigen die erfindungsgemäßen goldfarbenen Interferenzpigmente eine deutlich höhere Farbstärke und ein höheres Deckvermögen. Die erfindungsgemäßen Goldpigmente sind insbesondere im Tiefdruck auf Textilien eine gleichwertige im Bezug auf Glanz und Farbstärke überlegene Alternative zu den bekannten Metallbronzen.

Im Gegensatz zu den goniochromatischen Pigmenten weisen die enindungsgemäßen Pigmente keinen bzw. nur einen geringfügig winkelabhängigen Farbeffekt auf.

Gegenstand der Erfindung sind somit farbstarke Interferenzpigmente auf der Basis von mehrfach beschichteten plättchenförmigen Substraten, die mindestens eine Schichtenfolge aus

(A) einer hochbrechenden Pseudobrookit Beschichtung bestehend aus einem Gemisch aus TiO$_2$ und Fe$_2$O$_3$ im Verhältnis 10:1 bis 1:3, und optional ein oder mehreren Metalloxiden in Mengen von $\leq$ 20 Gew.% bezogen auf die Schicht (A),

(B) einer farblosen Beschichtung mit einem Brechungsindex n ≤ 1,8, und optional

(C) einer äußeren Schutzschicht

aufweisen.

Gegenstand der Erfindung ist weiterhin die Verwendung der erfindungsgemäßen Pigmente in Farben, Lacken, Druckfarben, Kunststoffen, keramischen Materialien, Gläsern, zur Lasermarkierung von Kunststoffen und Papieren und in kosmetischen Formulierungen, insbesondere in Druckfarben. Weiterhin sind die erfindungsgemäßen Pigmente auch zur Herstellung von Pigmentpräparationen sowie zur Herstellung von Trockenpräparaten, wie z.B. Granulate, Chips, Pellets, Briketts, etc. geeignet. Die Trockenpräparate sind insbesondere für Lacke und Druckfarben geeignet.

Geeignete Basissubstrate für die erfindungsgemäßen Mehrschichtpigmente sind einerseits opake und andererseits transparente plättchenförmige Substrate. Bevorzugte Substrate sind Schichtsilikate sowie mit Metalloxiden beschichtete plättchenförmige Materialien. Insbesondere geeignet sind natürliche und synthetische Glimmer, Talkum, Kaolin, plättchenförmige Eisen- oder Aluminiumoxide, Glas-, $SiO_2$-, $TiO_2$- oder synthetische Keramikplättchen, synthetische trägerfreie Plättchen, Liquid crystal polymers (LCPs), holographische Pigmente, BiOCl, Metallplättchen, wie z. B. Aluminiumplättchen, Aluminiumbronzen, Messingbronzen, Zinkbronzen, Titanbronzen, oder andere vergleichbare Materialien.

Die Größe der Basissubstrate ist an sich nicht kritisch und kann auf den jeweiligen Anwendungszweck abgestimmt werden. In der Regel haben die plättchenförmigen Substrate eine Dicke zwischen 0,1 und 5 µm, insbesondere zwischen 0,2 und 4,5 µm. Die Ausdehnung in den beiden anderen Bereichen beträgt üblicherweise zwischen 1 und 250 µm, vorzugsweise zwischen 2 und 200 µm, und insbesondere zwischen 5 und 60 µm.

Die Dicke der einzelnen Schichten mit hohem (Pseudobrookit) und niedrigem Brechungsindex auf dem Basissubstrat ist wesentlich für die optischen Eigenschaften des Pigments. Für ein Pigment mit intensiven Interferenzfarben muß die Dicke der einzelnen Schichten genau aufeinander eingestellt werden.

Wenn n der Brechungsindex einer dünnen Schicht und d ihre Dicke ist, wird die Interferenzfarbe dieser Schicht von dem Produkt n · d (n · d = optische Dicke) bestimmt. Die bei Normallichteinfall im reflektierten Licht entstehenden Farben eines solchen Films ergeben sich aus einer Verstärkung des Lichtes der Wellenlänge

$$\lambda = \frac{4}{2N-1} \cdot n \cdot d$$

und durch Schwächung des Lichtes der Wellenlänge,

$$\lambda = \frac{2}{N} \cdot n \cdot d$$

wobei N eine positive ganze Zahl ist.

Die bei zunehmender Filmdicke resultierende Variation der Farbe ergibt sich aus der Verstärkung bzw. Schwächung bestimmter Wellenlängen des Lichtes durch Interferenz. Wenn mehrere Schichten in einem Mehrschichtpigment die gleiche optische Dicke besitzen, wird die Farbe des reflektierten Lichts mit zunehmender Zahl der Schichten intensiver. Bei geeigneter Wahl der Schichtdicken können aber auch mit Schichten unterschiedlicher optischer Dicke sehr attraktive Interferenzpigmente erhalten werden. Die Dicke der einzelnen Metalloxidschichten unabhängig von ihrem Brechungsindex beträgt in Abhängigkeit vom Anwendungsgebiet in der Regel 10 bis 1000 nm, vorzugsweise 15 bis 800 nm und insbesondere 20-600 nm.

Die erfindungsgemäßen Interferenzpigmente weisen alternierend eine hochbrechende Pseudobrookit-Beschichtung (A) bestehend aus einem Gemisch aus $TiO_2$ und $FeO_3$, in Kombination mit einer farblosen niedrigbrechenden Beschichtung (B) auf. Die Pigmente können mehrere, gleiche oder verschiedene Kombinationen an Schichtpaketen enthalten, bevorzugt ist aber die Belegung des Substrats mit nur einem Schichtpaket (A) + (B) und optional (C). Zur Intensivierung der Farbstärke kann das erfindungsgemäße Pigment bis zu 4 Schichtpaketen enthalten, wobei die Dicke aller Schichten auf dem Substrat 3 µm allerdings nicht überschreiten sollte. Vorzugsweise wird eine ungerade Anzahl von Schichten auf das plättchenförmige Substrat aufgebracht mit je einer hochbrechenden Schicht in innerster und äußerster Lage. Besonders bevorzugt ist ein Aufbau von drei optischen Interferenzschichten in der Reihenfolge (A) (B) (A) und optional (C).

Die hochbrechende Schicht (A) hat einen Brechungsindex n ≥ 2,0, vorzugsweise n ≥ 2,1 und ist ein Gemisch aus $TiO_2$ und $Fe_2O_3$, wobei das Mischungsverhältnis 10:1 bis 1:3, insbesondere 3:1 bis 1:2,5 beträgt. Es handelt sich bei der Schicht (A) um den farbstarken Pseudobrookit. Die Dicke der Schicht (A) beträgt 10 - 550 nm, vorzugsweise 15 - 400 nm und insbesondere 20 - 350 nm.

Häufig empfiehlt es sich zur Erhöhung der Farbstärke der Schicht (A) dem $TiO_2/Fe_2O_3$-Gemisch noch ein oder mehrere Metalloxide, wie z.B. $Al_2O_3$, $Ce_2O_3$, $B_2O_3$, $ZrO_2$, $SnO_2$, zuzumischen. Der Gew.%-Anteil der weiteren Metalloxide neben dem $Fe_2O_3/TiO_2$-Gemisch sollte in der Schicht (A) nicht mehr als 20 Gew.%, vorzugsweise nicht mehr als 10 Gew.%, betragen.

Als farblose niedrigbrechende für die Beschichtung (B) geeignete Materialien sind vorzugsweise Metalloxide bzw. die entsprechenden Oxidhydrate, wie z.B. $SiO_2$, $Al_2O_3$, $AlO(OH)$, $B_2O_3$, $MgF_2$, $MgSiO_3$ oder ein Gemisch der genannten Metalloxide, geeignet. Die Dicke der Schicht (B) beträgt 10 - 1000 nm, vorzugsweise 20 - 800 nm und insbesondere 30 - 600 nm.

Durch die Beschichtung der Substrate mit einer hochbrechenden Pseudobrookitschicht, einer niedrigbrechenden Schicht (B) und einer hochbrechenden Schicht (A) entstehen Interferenzpigmente, deren Farbe, Glanz, Deckvermögen in weiten Grenzen variiert werden können.

Die erfindungsgemäßen Pigmente lassen sich leicht herstellen durch die Erzeugung mehrerer hoch- und niedrigbrechender Interferenzschichten mit genau definierter Dicke und glatter Oberfläche auf den feinteiligen, plättchenförmigen Substraten.

Die Metalloxidschichten werden vorzugsweise naßchemisch aufgebracht, wobei die zur Herstellung von Perlglanzpigmenten entwickelten naßchemischen Beschichtungsverfahren angewendet werden können; derartige Verfahren sind z.B. beschrieben in DE 14 67 468, DE 19 59 988, DE 20 09 566, DE 22 14 545, DE 22 15 191, DE 22 44 298, DE 23 13 331, DE 25 22 572, DE 31 37 808, DE 31 37 809, DE 31 51 343, DE 31 51 354, DE 31 51 355, DE 32 11 602, DE 32 35 017 oder auch in weiteren Patentdokumenten und sonstigen Publikationen.

Bei der Naßbeschichtung werden die Substratpartikel in Wasser suspendiert und mit einem oder mehreren hydrolysierbaren Metallsalzen bei einem für die Hydrolyse geeigneten pH-Wert versetzt, der so gewählt wird, daß die Metalloxide bzw. Metalloxidhydrate direkt auf den Plättchen ausgefällt werden, ohne daß es zu Nebenfällungen kommt. Der pH-Wert wird üblicherweise durch gleichzeitiges Zudosieren einer Base und/oder Säure konstant gehalten. Anschließend werden die Pigmente abgetrennt, gewaschen und getrocknet und gegebenenfalls geglüht, wobei die Glühtemperatur im Hinblick auf die jeweils vorliegende Beschichtung optimiert werden kann. In der Regel liegen die Glühtemperaturen zwischen 250 und 1000 °C, vorzugsweise zwischen 350 und 900 °C. Falls gewünscht können die Pigmente nach Aufbringen einzelner Beschichtungen abgetrennt, getrocknet und ggf. geglüht werden, um dann zur Auffällung der weiteren Schichten wieder resuspendiert zu werden.

Weiterhin kann die Beschichtung auch in einem Wirbelbettreaktor durch Gasphasenbeschichtung erfolgen, wobei z.B. die in EP 0 045 851 und EP 0 106 235 zur Herstellung von Perlglanzpigmenten vorgeschlagenen Verfahren entsprechend angewendet werden können. Der Farbton der Pigmente kann in weiten Grenzen durch unterschiedliche Wahl der Belegungsmengen bzw. der daraus resultierenden Schichtdicken variiert werden. Die Feinabstimmung für einen bestimmten Farbton kann über die reine Mengenwahl hinaus durch visuell oder meßtechnisch kontrolliertes Anfahren der gewünschten Farbe erreicht werden.

Zur Erhöhung der Licht-, Wasser- und Wetterstabilität empfiehlt es sich häufig, in Abhängigkeit vom Einsatzgebiet das fertige Pigment einer Nachbeschichtung oder Nachbehandlung zu unterziehen. Als Nachbeschichtungen bzw. Nachbehandlungen kommen beispielsweise die in den DE-PS 22 15 191, DE-OS 31 51 354, DE-OS 32 35 017 oder DE-OS 33 34 598 beschriebenen Verfahren in Frage. Durch diese Nachbeschichtung (Schicht C) wird die chemische Stabilität weiter erhöht oder die Handhabung des Pigments, insbesondere die Einarbeitung in unterschiedliche Medien, erleichtert.

Die erfindungsgemäßen Pigmente sind mit einer Vielzahl von Farbsystemen kompatibel vorzugsweise aus dem Bereich der Lacke, Farben und Druckfarben. Für die Herstellung der Druckfarben ist eine Vielzahl von Bindern, insbesondere wasserlösliche Typen, wie sie z.B. von den Firmen BASF, Marabu, Pröll, Sericol, Hartmann, Gebr. Schmidt, Sicpa, Aarberg, Siegberg, GSB-Wahl, Follmann, Ruco oder Coates Screen INKS GmbH vertrieben werden. Die Druckfarben können auf Wasserbasis oder Lösemittelbasis aufgebaut sein. Weiterhin sind die Pigmente auch für die Lasermarkierung von Papier und Kunststoffen sowie für Anwendungen im Agrarbereich, z.B. für Gewächshausfolien, geeignet.

Gegenstand der Erfindung ist somit auch die Verwendung der Pigmente in Formulierungen wie Farben, Druckfarben, Lacken, Kunststoffen, keramischen Materialien, Gläsern, in der Kosmetik, zur Lasermarkierung von Papier und Kunststoffen, zur Herstellung von Pigmentpräparationen und Trockenpräparaten, wie z.B. Pellets, Chips, Granulate, Briketts, etc.

Es versteht sich von selbst, daß für die verschiedenen Anwendungszwecke die Mehrschichtpigmente auch vorteilhaft in Abmischung mit organischen Farbstoffen, organischen Pigmenten oder anderen Pigmenten, wie z. B. transparenten und deckenden Weiß-, Bunt- und Schwarzpigmenten sowie mit plättchenförmigen Eisenoxiden, organischen Pigmenten, holographischen Pigmenten, LCPs (Liquid Crystal Polymers), und herkömmlichen transparenten, bunten und schwarzen Glanzpigmenten auf der Basis von metalloxidbeschichteten Glimmer- und $SiO_2$-Plättchen, etc., verwendet werden können. Die Mehrschichtpigmente können in jedem Verhältnis mit handelsüblichen Pigmenten und Füllern gemischt werden.

Die erfindungsgemäßen Pigmente sind weiterhin geeignet zur Herstellung von fließfähigen Pigmentpräparationen und Trockenpräparaten, insbesondere für Druckfarben und Lacke, vorzugsweise Autolacke, bestehend aus dem erfindungsgemäßen Pigmenten, Bindemittel und optional ein oder mehreren Additiven.

Die nachfolgenden Beispiele sollen die Erfindung näher erläutern ohne sie jedoch zu beschränken.

Beispiele:

Beispiel 1

100 g Glimmer der Teilchengröße 10-60 μm werden in 2 l entmineralisiertem Wasser auf 75°C aufgeheizt. Nach Erreichen dieser Temperatur wird unter starkem Rühren eine Lösung von 130,5 g $FeCl_3$ x 6 $H_2O$, 46,5 g $TiCl_4$ und 11,6 g $AlCl_3$ x 6 $H_2O$ in 84,3 g entmineralisiertem Wasser langsam eindosiert. Der pH-Wert wird mit 32%-iger NaOH-Lösung konstant bei pH 2,6 gehalten. Nach Zugabe dieser Lösung wird ca. 15 Minuten nachgerührt. Anschließend wird der pH-Wert mit 32%-iger NaOH-Lösung auf pH = 7,5 angehoben und bei diesem pH-Wert werden 431 g Natronwasserglaslösung (13,5 % $SiO_2$) langsam zudosiert. Danach wird der pH-Wert mit 10%-iger Salzsäure auf 2,6 abgesenkt und anschließend eine Lösung von 130,5 g $FeCl_3$ x 6 $H_2O$, 46,5 g $TiCl_4$ und 11,6 g $AlCl_3$ x 6 $H_2O$ in 84,3 g entmineralisiertem Wasser langsam eindosiert. Der pH-Wert wird mit 32%iger NaOH-Lösung konstant bei pH = 2,6 gehalten. Nach Zugabe dieser Lösung wird ca. 15 Minuten nachgerührt. Anschließend wird der pH-Wert mit 32%-iger NaOH-Lösung auf pH = 5,0 angehoben und weitere 15 Minuten nachgerührt.

Das Pigment wird abfiltriert, mit entmineralisiertem Wasser gewaschen und 16 h bei 110 °C getrocknet. Das Pigment wird abschließend 30 Minuten bei 850 °C geglüht. Man erhält ein leicht rotstichiges Goldpigment mit intensiver Farbe, hohem Deckvermögen und starkem Glanz.

Beispiel 2:

100 g Glimmer der Teilchengröße 10-60 μm werden in 2 l entmineralisiertem Wasser auf 75 °C aufgeheizt. Nach Erreichen dieser Temperatur wird unter starkem Rühren eine Lösung von 121,5 g $FeCl_3$ x 6 $H_2O$, 43,3 g $TiCl_4$ und 10,6 g $AlCl_3$ x 6 $H_2O$ in 77,0 g entmineralisiertem Wasser langsam eindosiert. Der pH-Wert wird mit 32%-iger NaOH-Lösung auf pH = 7,5 angehoben und bei diesem pH-Wert werden 394 g Natronwasserglaslösung (13,5 % $SiO_2$) langsam zudosiert. Danach wird der pH-Wert mit 10%-iger Salzsäure auf 2,6 abgesenkt. Es wird 15 Minuten nachgerührt und danach eine Lösung von 135,0 g $FeCl_3$ x 6 $H_2O$, 51,7 g $TiCl_4$ und 11,0 g $AlCl_3$ x 6 $H_2O$ in 87,2 g entmineralisiertem Wasser langsam zudosiert. Der pH-Wert wird mit 32%-iger NaOH-Lösung konstant bei pH = 2,6 gehalten. Nach Zugabe dieser Lösung wird ca. 15 Minuten nachgerührt. Anschließend wird der pH-Wert mit 32%-iger NaOH-Lösung auf pH = 5,0 angehoben und weitere 15 Minuten nachgerührt. Das Pigment wird abfiltriert, mit entmineralisiertem Wasser gewaschen und 16 h bei 110 °C getrocknet.

Das Pigment wird zuletzt 0,5 h bei 850 °C geglüht. Man erhält ein leicht grünstichiges Goldpigment mit intensiver Farbe, hohem Deckvermögen und starkem Glanz.

Koloristische Daten im Vergleich zu einem Perlglanzgoldpigment und einem Goldbronzepigment die dem Stand der Technik entsprechen (Hunter-Lab-Werte, gemessen auf schwarzem Untergrund im Glanz 22,5°/22,5°):

| | L | a | b | h* | C* | Deckvermögen |
|---|---|---|---|---|---|---|
| goldfarbenes Perlglanzpigment Iriodin® 306 ($TiO_2$/ $Fe_2O_3$-Glimmerpigment der Teilchengröße 10-60 μm der Merck KGaA) | 72,9 | 0,6 | 29,7 | 88,8 | 29,7 | 40,8 |
| Gold-Interferenzpigment Beisp. 1 | 76,2 | 2,5 | 39,8 | 86,5 | 39,9 | 57,5 |
| Gold-Interferenzpigment Beisp. 2 | 83,4 | -4,8 | 41,0 | 96,7 | 41,3 | 72,0 |
| Metallgoldbronze (Fa. Eckart, Reichbleich-gold), | 78,2 | 0,9 | 22,7 | 87,7 | 22,7 | 51,8 |

Die koloristischen Daten zeigen insbesondere im b-Wert und der Buntheit C* eindeutig die Vorteile der erfindungsgemäßen Interferenzpigmente gegenüber den Vergleichspigmenten.

Beispiel 3:

100 g Glimmer der Teilchengröße 10-60 μm werden in entmineralisiertem Wasser auf 75 °C aufgeheizt. Nach Erreichen dieser Temperatur wird unter starkem Rühren eine Lösung von 188,0 g $FeCl_3$ x 6 $H_2O$, 77,0 g $TiCl_4$ und 16,7

g AlCl$_3$ x 6 H$_2$O in 121,4 g entmineralisiertem Wasser eindosiert. Der pH-Wert wird mit NaOH-Lösung (32 %) konstant bei pH = 2,6 gehalten. Nach Zugabe dieser Lösung wird ca. 15 Minuten nachgerührt. Anschließend wird der pH-Wert mit NaOH-Lösung (32 %) auf pH = 7,5 angehoben und bei diesem pH-Wert 484,6 g Natronwasserglaslösung (13,5 % SiO$_2$) zudosiert. Danach wird der pH-Wert mit Salzsäure (10 % HCl) auf 2,6 abgesenkt, 15 Minuten nachgerührt und eine Lösung von 188,0 g FeCl$_3$ x 6 H$_2$O, 77,0 g TiCl$_4$ und 16,7 g AlCl$_3$ x 6 H$_2$O in 121,4 g entmineralisiertem Wasser mit einer Rate von 1 ml/min zudosiert. Der pH-Wert wird mit NaOH-Lösung (32 %) konstant bei pH = 2,6 gehalten. Nach Zugabe dieser Lösung wird ca. 15 Minuten nachgerührt. Anschließend wird der pH-Wert mit NaOH-Lösung (32 %) auf pH = 5,0 angehoben und weitere 15 Minuten nachgerührt. Das Pigment wird filtriert, mit Wasser gewaschen und 16 h bei 110 °C getrocknet. Das Pigment wird abschliessend 30 Minuten bei 850 °C geglüht. Man erhält ein orangerotfarbenes Glanzpigment mit intensiver Farbe, hohem Deckvermögen und starkem Glanz.

Beispiel 4:

200 g Goldpigment aus Beispiel 1 werden in 1,8 l entmineralisiertem Wasser unter Rühren auf 75 °C aufgeheizt. Nach Erreichen dieser Temperatur wird der pH-Wert mit Salzsäure (5 % HCl) auf 2,5 eingestellt und eine Lösung von 11,5 g ZrOCl$_2$ x 8 H$_2$O, 11,4 g NaH$_2$PO$_4$ x H$_2$O und 10 ml Salzsäure (37 % HCl) in 856 ml entmineralisiertem Wasser zudosiert. Der pH-Wert wird dabei mit Natronlauge (5 % NaOH) konstant gehalten. Nach einer Nachrührzeit von 30 Minuten wird der pH-Wert mit Natronlauge (5 % NaOH) auf 9,2 erhöht. Im Anschluß an eine Nachrührzeit von 30 Minuten wird eine Lösung von 4,1 g Z6040 (Organosiloxan der Fa. Dow Corning) in 200 ml entmineralisiertem Wasser zudosiert und 30 Minuten nachgerührt. Das Produkt wird abfiltriert, gewaschen und bei 140 °C 16 h lang getrocknet.

Anwendungsbeispiele

Beispiel 5: -Siebdruck auf Textil

Die Druckfarbe bestehend aus Helizarin MT, Verzögerer (2 %) und Interferenzpigment aus Beispiel 1 (15 %) wird auf einer Flachbettsiebdruckmaschine der Fa. Schenk (Sieb: T 43; Rakel: 70 Shore) auf Baumwollstoff ausgedruckt. Die Bedruckung zeigt einen ausgezeichneten Glanz mit hoher Farbintensität und hohem Deckvermögen sowohl auf schwarzem als auch auf weißem Stoff.

Beispiel 6: -Siebdruck auf Papier

Die Druckfarbe bestehend aus MZ-Lack 093 (Fa. Pröll) und Pigment aus Beispiel 1 (15%) wird auf einer esc. Atma Flachbett SDR-Maschine verdruckt. Die Bedruckung zeigt ausgezeichneten Glanz mit hoher Farbintensität und hohem Deckvermögen sowohl auf schwarzem als auch auf weißem Papier.

Beispiel 7: -Tiefdruck auf Papier

Die Druckfarbe bestehend aus 70 g GS 95 MB 011 TW (Fa. Gebr. Schmidt), 30 g 1-Ethoxy-2-propanol und 30 g Goldpigment aus Beispiel 1, wird auf einer Tiefdruckmaschine der Fa. Moser und einem Saueressiggerät verdruckt. Das Druckbild zeichnet sich durch einen außergewöhnlich starken Glanz, intensive Farbe und ein hohes Deckvermögen aus.

Beispiel 8: -Pigmentierung von granulatförmigen Kunststoffen

PE-, PP- und PS-Granulaten werden jeweils 1 % Interferenzpigment aus Beispiel 1 zugegeben. Letzteres wird 2,5 Minuten im Rechtslauf und 2,5 Minuten im Linkslauf auf die Granulate verteilt (="auftrommeln").

a) Beispiel für Polyolefine:

| | |
|---|---|
| 494 g | HDPE und HDPP |
| 1 g | Haftmittel (2' mischen) |
| 5 g | Interferenzpigment (2 x 2,5' mischen) |
| 500 g | Mischung |

b) Beispiel für Polystyrol (PS):

| 492,5 g | PS |
|---|---|
| 2,5 g | Haftmittel (2' mischen) |
| 5,0 g | Pigment (2 x 2,5' mischen) |
| $\overline{500 \text{ g}}$ | Mischung |

Verarbeitung

Diese wie oben beschriebenen hergestellten "äußerlich pigmentierten" Granulate werden dann auf einer normalen Spritzgießmaschine zu Formteilen (Stufenplättchen) verarbeitet.

| | Schwarzkarte 22,5 ° /22,5° | | | |
|---|---|---|---|---|
| | L | a | b | C* |
| HDPE Iriodin® 306 | 63,5 | 5,0 | 42,7 | 43,0 |
| HDPE Beispiel 1 | 68,3 | 2,4 | 47,0 | 47,1 |
| Polystyrol Iriodin® 306 | 66,0 | 3,5 | 46,5 | 46,6 |
| Polystyrol Beispiel 1 | 71,1 | 0,8 | 51,6 | 51,6 |

Beispiel 9: -Autolack

| 1.20 % | Interferenzpigment aus Beispiel 1 |
|---|---|
| 0.30 % | Hostaperngrün 8 G |
| 0.30 % | Farbruß FW 200 |
| 0.50 % | Microtitan MT 500 HD |
| 0.10 % | Kronos 2310 |

P/B = 0.21 : 1
Bindersystem: Acrylate/Melamine
Einsatzmenge 0.5 - 6 %
Präferiert: 0.5 - 2 %

| | Schwarzkarte 22,5 ° /22,5° | | | |
|---|---|---|---|---|
| | L | a | b | C* |
| Lackkarte Iriodin® 306 | 56,5 | - 1,0 | 30,3 | 30,3 |
| Lackkarte Beispiel 1 | 67,6 | - 3,2 | 47,1 | 47,2 |
| Lackblech Iriodin® 306 | 68,0 | 2,6 | 45,5 | 45,6 |
| Lackblech Beispiel 4 | 75,6 | - 1,4 | 54,2 | 54,2 |

**Patentansprüche**

1. Farbstarke Interferenzpigmente auf der Basis von mehrfach beschichteten plättchenförmigen Substraten, die mindestens eine Schichtenfolge aus

   (A) einer hochbrechenden Pseudobrookit-Beschichtung bestehend aus einem Gemisch aus $TiO_2$ und $Fe_2O_3$ im Verhältnis 10:1 bis 1:3 und optional ein oder mehreren Metalloxiden in Mengen von $\leq$ 20 Gew.% bezogen auf die Schicht (A),

   (B) einer farblosen Beschichtung mit einem Brechungsindex n $\leq$ 1,8,

und optional

(C) einer äußeren Schutzschicht

aufweisen.

2.  Interferenzpigmente nach Anspruch 1 oder 2, **dadurch gekennzeichnet, daß** es sich bei den plättchenförmigen Substraten um natürlichen oder synthetischen Glimmer, Glas-, $Al_2O_3$-, $SiO_2$- oder $TiO_2$-Plättchen sowie mit Metalloxiden beschichtete, plättchenförmige Materialien handelt.

3.  Interferenzpigmente nach einem der Ansprüche 1 bis 2, **dadurch gekennzeichnet, daß** die Schicht (B) im wesentlichen aus ein oder mehreren Metalloxiden besteht.

4.  Interferenzpigmente nach einem der Ansprüche 1 bis 3, **dadurch gekennzeichnet, daß** die Schicht (B) im wesentlichen aus Siliziumdioxid, Aluminiumoxid, Magnesiumfluorid oder deren Gemischen besteht.

5.  Interferenzpigmente nach einem der Ansprüche 1 bis 4, **dadurch gekennzeichnet, daß** die Schicht (A) als weiteres Metalloxid $Al_2O_3$, $Ce_2O_3$ und/oder $B_2O_3$ enthält.

6.  Interferenzpigmente nach einem der Ansprüche 1 bis 5, **dadurch gekennzeichnet, daß** sie bis zu viermal die Schichtenfolge (A) + (B) aufweisen.

7.  Interferenzpigmente nach einem der Ansprüche 1 bis 6, **dadurch gekennzeichnet, daß** sie nur eine Schichtenfolge (A) + (B)+ (A) und optional (C) enthält.

8.  Verfahren zur Herstellung der Interferenzpigmente nach einem der Ansprüche 1 bis 7, **dadurch gekennzeichnet, daß** die Metalloxide naßchemisch durch hydrolytische Zersetzung von Metallsalzen in wäßrigen Medium auf das plättchenförmige Substrat aufgebracht werden.

9.  Verwendung der Interferenzpigmente nach Anspruch 1 in Farben, Lacken, Druckfarben, Kunststoffen, keramischen Materialien, Gläsern, in kosmetischen Formulierungen, zur Lasermarkierung von Papier und Kunststoffen, zur Herstellung von Pigmentpräparationen und Trockenpräparaten.

10. Pigmentpräparationen enthaltend ein oder mehrere Bindemittel und ein oder mehrere Interferenzpigmente gemäß Anspruch 1.

11. Trockenpräparationen wie Pellets, Chips, Granulate, Briketts, enthaltend Interferenzpigmente nach Anspruch 1.

**Claims**

1.  Intensely coloured interference pigments based on multicoated flake-form substrates which have at least one layer sequence comprising

    (A) a high-refractive-index pseudobrookite coating consisting of a mixture of $TiO_2$ and $Fe_2O_3$ in the ratio 10: 1 to 1:3 and optionally one or more metal oxides in amounts of $\leq 20\%$ by weight, based on layer (A),

    (B) a colourless coating having a refractive index n $\leq 1.8$,
    and optionally

    (C) an outer protective layer.

2.  Interference pigments according to Claim 1, **characterised in that** the flake-form substrates are natural or synthetic mica, glass flakes, $Al_2O_3$ flakes, $SiO_2$ flakes or $TiO_2$ flakes and metal-oxide-coated flake-form materials.

3.  Interference pigments according to one of Claims 1 to 2, **characterised in that** layer (B) essentially consists of one or more metal oxides.

4. Interference pigments according to one of Claims 1 to 3, **characterised in that** layer (B) essentially consists of silicon dioxide, aluminium oxide, magnesium fluoride or mixtures thereof.

5. Interference pigments according to one of Claims 1 to 4, **characterised in that** layer (A) comprises $Al_2O_3$, $Ce_2O_3$ and/or $B_2O_3$ as further metal oxide.

6. Interference pigments according to one of Claims 1 to 5, **characterised in that** they have the layer sequence (A) + (B) up to four times.

7. Interference pigments according to one of Claims 1 to 6, **characterised in that** they contain only one layer sequence (A) + (B) + (A) and optionally (C).

8. Process for the preparation of the interference pigments according to one of Claims 1 to 7, **characterised in that** the metal oxides are applied to the flake-form substrate wet-chemically by hydrolytic decomposition of metal salts in aqueous medium.

9. Use of the interference pigments according to Claim 1 in paints, coatings, printing inks, plastics, ceramic materials, glasses, in cosmetic formulations, for laser marking of paper and plastics, for the preparation of pigment compositions and dry preparations.

10. Pigment compositions comprising one or more binders and one or more interference pigments according to Claim 1.

11. Dry preparations, such as pellets, chips, granules and briquettes, comprising interference pigments according to Claim 1.


**Revendications**

1. Pigments d'interférence colorés de façon intense, basés sur des substrats sous forme de flocons qui ont au moins une séquence de couche, comprenant

   (A) un revêtement de pseudobrookite à indice de réfraction haut constitué d'un mélange de $TiO_2$ et de $Fe_2O_3$ dans le rapport 10:1 to 1:3 et optionnellement d'un ou de plusieurs oxydes selon une quantité de ≤20% en poids, sur la base de la couche (A),

   (B) un revêtement sans couleur présentant un indice de réfraction n ≤1.8, et optionnellement

   (C) une couche de protection externe.

2. Pigments d'interférence selon la revendication 1, **caractérisés en ce que** les substrats sous forme de flocons sont du mica naturel ou synthétique, des flocons de verre, des flocons d'$Al_2O_3$, des flocons de $SiO_2$ ou des flocons de $TiO_2$ et des matériaux sous forme de flocons revêtus d'oxyde métallique.

3. Pigments d'interférence selon l'une des revendications 1 à 2, **caractérisés en ce que** la couche (B) est constituée essentiellement d'un ou de plusieurs oxydes métalliques.

4. Pigments d'interférence selon l'une des revendications 1 à 3, **caractérisés en ce que** la couche (B) est constituée essentiellement de dioxyde de silicium, d'oxyde d'aluminium, de fluorure de magnésium ou de mélanges afférents.

5. Pigments d'interférence selon l'une des revendications 1 à 4, **caractérisés en ce que** la couche (A) comprend $Al_2O_3$, $Ce_2O_3$ et/ou $B_2O_3$ en tant qu'autres oxydes métalliques.

6. Pigments d'interférence selon l'une des revendications 1 à 5, **caractérisés en ce qu'**ils présentent la séquence de couches (A) + (B) jusqu'à quatre fois.

7. Pigments d'interférence selon l'une des revendications 1 à 6, **caractérisés en ce qu'**ils contiennent seulement une séquence de couches (A) + (B) + (A) et optionnellement (C).

**8.** Procédé pour la préparation des pigments d'interférence selon l'une des revendications 1 à 7, **caractérisé en ce que** les oxydes métalliques sont appliqués sur le substrat sous forme de flocons d'une façon chimique par voie humide par décomposition hydrolytique de sels métalliques dans un milieu aqueux.

**9.** Utilisation des pigments d'interférence selon la revendication 1 dans des peintures, des revêtements, des encres d'impression, des plastiques, des matériaux de céramique, des verres, des formulations cosmétiques, pour un marquage laser de papier ou de matière plastique, pour la préparation de compositions de pigments et pour des préparations par voie sèche.

**10.** Compositions de pigment comprenant un ou plusieurs liants et un ou plusieurs pigments d'interférence selon la revendication 1.

**11.** Préparations par voie sèche, telles que des pastilles, des copeaux, des granulés et des briquettes, comprenant des pigments d'interférence selon la revendication 1.